**Europäisches Patentamt**

**European Patent Office**

**Office européen des brevets**

(19)

(11) Publication number: **0 113 126**
**A1**

(12)

# EUROPEAN PATENT APPLICATION

(21) Application number: **83113202.2**

(22) Date of filing: **29.12.83**

(51) Int. Cl.³: **B 65 H 67/06**
**D 06 B 5/16, B 65 G 47/14**

(30) Priority: 30.12.82 IT 2504182
06.10.83 IT 2317783
06.10.83 IT 2317883
07.10.83 IT 2319683 U
07.10.83 IT 2319783 U
07.10.83 IT 2319883 U

(43) Date of publication of application:
11.07.84 Bulletin 84/28

(84) Designated Contracting States:
BE CH DE FR GB LI SE

(71) Applicant: OFFICINE MINNETTI di Federico Minnetti &
C. S.A.S.
Via Colonna 2
I-51018 Pieve a Nievole (Pistoia)(IT)

(72) Inventor: Raveggi, Ornella
Via Colonna, 2
I-51018 Pieve a Nievole (Pistoia)(IT)

(72) Inventor: Minnetti, Federico
Via Colonna, 2
I-51018 Pieve a Nievole (Pistoia)(IT)

(74) Representative: Dr. Ing. A. Racheli & C.
Viale San Michele del Carso, 4
I-20144 Milano(IT)

(54) A process and system for automatic handling of yarn reels.

(57) A reel handling process, particularly in connection with an equipment for dyeing of such reels, comprises an initial reel alignment and orderly arranging step; the arranged reels are then withdrawn and mechanically slipped onto the rods of dyeing baskets; following dyeing, the reels are mechanically drawn from the dyeing baskets and arranged on a cage for centrifugation. The system comprises a conveyor system (18, 20, 22, 24) coordinated for reel alignment; and at least one unit (70) comprising a withdrawing apparatus (72) for reel gripping and displacement; a skirting apparatus (74) cooperating with said withdrawing apparatus (76); a loading and/or unloading apparatus for loading reels from said drawing apparatus to a dyeing basket (130) and for interposition of spacing discs between the reels; and, as the case may be, an apparatus for the application of clamping devices (610).

EP 0 113 126 A1

FIG.1

FIG.2

Applicant:

OFFICINE MINNETTI

DI FEDERICO MINNETTI & C. s.a.s.

Via Colonna, 2

51018 PIEVE A NIEVOLE (Pistoia)

"A PROCESS AND SYSTEM FOR AUTOMATIC HANDLING OF YARN REELS"

This patent application relates to the art of handling yarns in cones bobbins or reels (i. e. windings of yarn in frusto-conical or cylindrical shape, semirigid, on a rigid core also of frusto-conical or cylindrical shape), generally for loading and unloading thereof in "baskets" for a dyeing treatment.

Baskets, as normally used for reel yarn dyeing, have a base and a plurality of parallel rods co-extended from the base. According to the techniques at present known, an operator manually takes the reels from a container having such reels in bulk therein, subjects the same to a skirting or rounding operation (i.e. rounding off of the corners or edges by pressing the reels between two shaped plates or pans), slips the reels one by one on each rod of the basket interposing spacing discs therebetween, to form on each rod a pile of equally oriented reels, that is, in case of conical reels or cones, with the cone minor base located above and the major base below, and then clamps each pile or row with a clamping device. The baskets so prepared are introduced into a dyeing cabinet and processed or treated. After the treatment, still by manual operation, the reels or cones are removed and loaded in bulk into an hydroextractor cage for subsequent centrifuging.

From the foregoing it clearly appears that the process and systems (plants) now in use require much labour with the disadvantage of high inherent cost; moreover, this is a hard and repeatative work. Therefore, there is in the art the need of mechanizing and automating the above mentioned operations, providing conditions of less heavy work at a reduced cost.

Prior US patent No. 3,358, 940 (Beckwith) is known, which patent discloses an apparatus for continuous supply of bobbins to an automatic winding machine; the apparatus comprises a hopper from which the bobbins are evacuated and aligned through an inclined base plate and an upper guide plate to a rotary vane drum for supply to a vertical conveyor.

From French patent 2,228,018 (Officine Savio S.p.A.) is also known a shuttle aligning device comprising conveyor belts and a blade elevator belt.

Such apparatuses are concerned with some different fields over that dealt with in this patent application, they cannot be applied to articles, for example of frusto-conical shape, and solve only a problem of alignment of objects and not the more complex problem of complete handling.

It is an object of the present invention to provide for reel yarn handling (reels of conical or cylindrical shape), particularly in connection with loading of reels in dyeing cabinets by complete mechanical operation, thus improving the working conditions and reducing the costs.

The above objecthas been achieved by a process for handling yarn reels, according to this patent application, particularly in connection with loading in a dyeing cabinet, comprising the following steps: supply of reels in bulk, alignment and ordered arrangement of the reels to have the reels arranged one by one in succession with the same attitude, particularly, in case of frusto-conical reels, with the major base ahead in the travelling direction. The reel alignment step comprises the step of push advancing the reels in a first section, the reels being supported on two angled walls; advancing the reels on a second section, said reels being supported at the bottom, said reels travelling at a higher speed than in said first section, and being guided on both sides by walls having a larger angle than in said first section. The process also includes the step of drawing or taking one by one the aligned ordered reels, said drawing operation being accomplished by engaging the reels from the inside of the core thereof. The process also comprises the operation of transferring the reels to a basket and slipping the same on to the basket rods and arranging spacing discs between each reel and the next, in which each reel is gripped by engaging the inside of the reel core, and the reel drawing for transfer to the basket is carried out concurrently with the laying down of a spacing disc, and the laying down of the reel is carried out simultaneously with the drawing or taking of the next spacing disc; the process further comprises the step of intermittently angularly rotating the basket through predetermined angles until a given number of reels are on a rod of the basket.

It is also an object of this invention to provide a system or plant for handling of articles, particularly reels, comprising a reel alignment unit, which in turn comprises an inclined plane or chute for the supply of reels in bulk; a rotary drum with longitudinal tabs or vanes downstream of the chute for supply of reels in groups; a first advancement section downstream of the drum, comprising fixed or stationary inclined side walls and a continuously to and fro moving advancement pusher; a second section downstream of the first section comprising fixed or stationary inclined walls and a conveyor belt on the bottom; the angled arrangement of the fixed or stationary walls of the first section being such that a reel would bear thereon; the angled arrangement of the fixed or stationary walls of the second section being at a larger angle than in the first section and such that a reel bears on the bottom belt. A third advancement section includes side walls comprising moving belts on which the reels would bear, the belts being arranged at an angle to one another; a fourth section comprises a belt intermittently advancing by a movement controlled in accordance with the number of reels passing along a photocell.

The system further comprises a basket loading unit for a dyeing cabinet, including: a reel drawing apparatus (drawing or drawing-positioning apparatus), a skirting device or apparatus, a transfer apparatus, and an apparatus for arranging clamping devices. The drawing apparatus comprises a rotating body having radially arranged gripping or engagement devices which are regularly angularly spaced apart from one another. Preferably, each gripping device comprises jaws movable between an open position for reel engagement and a closed disengagement position; and each gripping device is mounted on the rotating body so to be extensible therefrom. The skirting apparatus is arranged at an angular position of the reel drawing-positioning apparatus and on a fixed structure comprises a unit of two lower skirting half-pans of half plates for a base of the reels and an upper skirting pan or plate for the opposite base of the reels. The unit and the pan or plate can be moved near each other to clamp a reel, and the two half pans or plates have a sufficient gap for the passage of an extensible stem for a said engagement means.

The transfer apparatus comprises at least one gripping member or pliers formed of spreadable jaws to engage the core of a reel from inside, and/are a gripping member formed of spreadable jaws to engage the hole of a spacing disc, from a magazine thereof.

The transfer apparatus comprises a movable crosspiece carrying two said pliers members which are spaced apart and movable transversely of the crosspiece movement.

An applying-removing apparatus for clamping devices comprises a pair of jaws, one of which provided with a cam for the control of the clamping device.

A centering apparatus for the rods of the dyeing basket comprises on a fixed structure jaws or arms rotating about vertical pins for close arrangement about a rod of the basket at loading or unloading step.

During such a loading and unloading step, the dyeing basket is preferably carried on a rotating and linearly movable platform. Preferably, the system also includes a basket unloading unit comprising a movable and rotating platform for the basket, a centering device or apparatus for the rods, a lifting device or apparatus for the reels on the rod, a pliers reel transfer device or apparatus, and a reel drawing positioning device or apparatus. The reel transfer and reel drawing-positioning devices are substantially corresponding to those of the loading unit.

According to an embodiment, a gripping device for the drawing apparatus comprises jaws, generally in number of three, movable between an open position for reel engagement and a closed disengagement position; at open position, the jaws engage an inner wall of the reel core, and at closed position are clear of said inner wall; the device also comprises means for jaw opening and closing and preferably means for advancement or feeding. Preferably, the jaws are operated to open and close by a cylinder piston device having, at the end of the movable member, a head with a peripheral cavity engaging feet integral with the jaws. Provision could also be made for a reel ejecting means comprising a pusher, generally in the form of flat ring movable about the jaws; the pusher is spring pressed to an extended position of reel ejection and is retained against the spring action, when the jaws are at open position by a lever which is integral with one of the jaws.

According to preferred embodiments, a reel gripping member on the transfer apparatus comprises at least two jaws movable between a closed condition, wherein they do not engage the inner wall of a reel core, and an open condition, wherein they engage said wall, each jaw having an attachment tang for connection to an operating means and a gripping portion integral with said tang and also a stop or retainer means extended from said jaw; the gripping portion has a bulb shape and has teeth extended from the surface; the stop or retainer means may be a semicircular pan or plate on each jaw having an edge with a relief towards the gripping end of the member, or may comprise a pair of inclined curved bands, each of which integral with one of two jaws.

A disc gripping member comprises a gripping portion, divided into a plurality of jaws (generally two) movable between an open condition, in which they engage an edge of a spacing disc about the through hole thereof, and a closed condition, in which they do not engage the disc; said member comprises a gripping portion and the latter includes a stop or retainer ridge extended transversely of the longitudinal axis of the gripping portion and forming a stop or retainer; a circumferential groove; and a retaining tooth radially projecting and axially spaced apart from the ridge; the stop ridge is generally a circular crown pan or plate applied, generally by welding, to the body of the gripping member; the tooth has a generally circular shape as seen in plan view and has a diameter smaller than the diameter of the disc hole.

The application of the clamping device has been hitherto manually carried out.

It is a need in the field, particularly in connection with the provision of mechanized systems for reel treatment, to mechanize the application and removal of the clamping devices on the rods.

Therefore, it is another object of this patent application to provide for mechanical application of reel clamping devices on rods.

An applying-removing apparatus for clamping devices comprises gripping means for clamping device gripping and lifting means for a control lever of the clamping device, said lifting means comprising an inclined surface cam movable between a position wherein said lever is allowed to lower by gravity and a position wherein said lever is lifted releasing the device.

In an embodiment of the system, where a stock of separating or spacing discs as supplied by a single magazine rod is considered insufficient, a magazine rod supplying (or unloading) apparatus is provided and comprises a continuous conveyor means having engagement elements for engaging the feet of disc carrying rods, said engagement elements being longitudinally spaced apart on said means; it also comprises means for stepwise feeding or advancement of the conveyor means; generally the engagement means comprises guides or sleeves for receiving at least the edges of the rod feet and preferably so that the ends of the rod feet project to bear on flat guides fixed to the device, on which they can slide; and preferably the device includes a side pusher at the conveyor end to eject the unloaded rods or the disc loaded rods.

The new process and relative system enable the loading of reels on a dyeing basket, and unloading therefrom in completely mechanized manner without any labour, but for supervision tasks.

In the following an embodiment at present preferred of the system will be described, in connection with which also the process will be explained, which preferred embodiment is shown in the accompanying drawings, in which:

Fig. 1 is a schematic perspective view of a first portion of the system, relating to a unit for ordered alignment of the reels, shown with reels thereon;

Fig. 2 is a schematic perspective view of a second portion of the system, relating to a basket loading unit, for loading reels on the rods of a dyeing basket;

Fig. 3 is a schematic perspective view of a third portion of the system, relating to a basket unloading unit fo unloading reels from the rods of a dyeing basket;

Fig. 4 is an enlarged cut away view taken according to the arrow 4 in Fig. 1;

Fig. 5 is an enlarged sectional view taken along line 5-5 of Fig. 1;

Fig. 6 is an enlarged sectional view taken along line 6-6 of Fig. 1;

Fig. 7 is a front view of a wheel-like drawing-positioning apparatus for reel displacement, shown in Fig. 2;

Fig. 8 shows a variant to the apparatus of Fig. 7; particularly it is a partially sectioned, cut away side view of a wheel portion with a reel gripping device applied thereto; the jaws are shown at closed retracted position and the pusher at extended position;

Fig. 9 is a partially sectioned cut away view of the gripping device of Fig. 8, as seen from the bottom of Fig. 8; for a clear illustration only one jaw is drawn and such a jaw is shown by full line at closed or disengagement condition and by dashed line at the open or engagement condition; a reel is also shown and a jaw at closed position is shown therein by dash lines;

Fig. 10 is an enlarged view showing the device of Fig. 8 at closed condition, as seen in a direction at right angles to the longitudinal axis thereof;

Fig. 11 is a view, partly in axial section, of a skirting station;

Fig. 12 is a view according to arrow 12 of Fig. 11;

Fig. 13 is a front view of a pliers transfer apparatus;

Fig. 14 is a plan view of the pliers transfer apparatus of Fig. 13;

Fig. 15 is a side view showing a type of reel gripping member, for use on the transfer apparatus of Figs. 13 and 14, said member being shown in partial sectional view;

Fig. 16 is a top view of a jaw;

Fig. 17 is a part lateral, part side, sectional view through a slightly varied gripping member;

Fig. 18 is a half drawn bottom view relative to Fig. 17;

Fig. 19 is a side view of a disc gripping member, with a jaw shown in sectional view;

Fig. 20 is a fragmentary top view of Fig. 19;

Fig. 21 is a view showing an applying-removing apparatus for applying and removing clamping devices, partly shown in front view and partly in vertical sectional view; the apparatus is shown at lowered condition on a reel pile, slipped onto a rod, with a clamping device already positioned on the rod and clamped;

Fig. 22 is a view of the apparatus, partly in side view orthogonal to Fig. 21 and partly in axial sectional view;

Fig. 23 is a sectional view taken along line 23-23 of Fig. 22;

Fig. 24 is a side view of a disc-carrying magazine rod supplying device, in a cut away view, in which the disc-carrying rods are also shown cut away;

Fig. 25 is a plan view of the device of Fig. 24, shown adjacent a dyeing basket being loaded with reels, in a highly schematized view;

Fig. 26 is a sectional view taken along line 26-26 of Fig. 24; and

Figs. 27, 28, 29 and 30 are two side views, a plan view and a detail of a centering-lifting apparatus, respectively.


The system and process will be hereinafter described for use with yarn reels indicated at R. Although reels of frusto-conical shape on rigid frusto-conical core are described, it should be intended that by light changes the system and process can be adapted to cylindrical reels. The system comprises an aligning-orienting unit 10, a basket loading unit 70 for loading the baskets of a dyeing cabinet and in the case a unit 70' for unloading of baskets and loading of an hydroextractor cage.

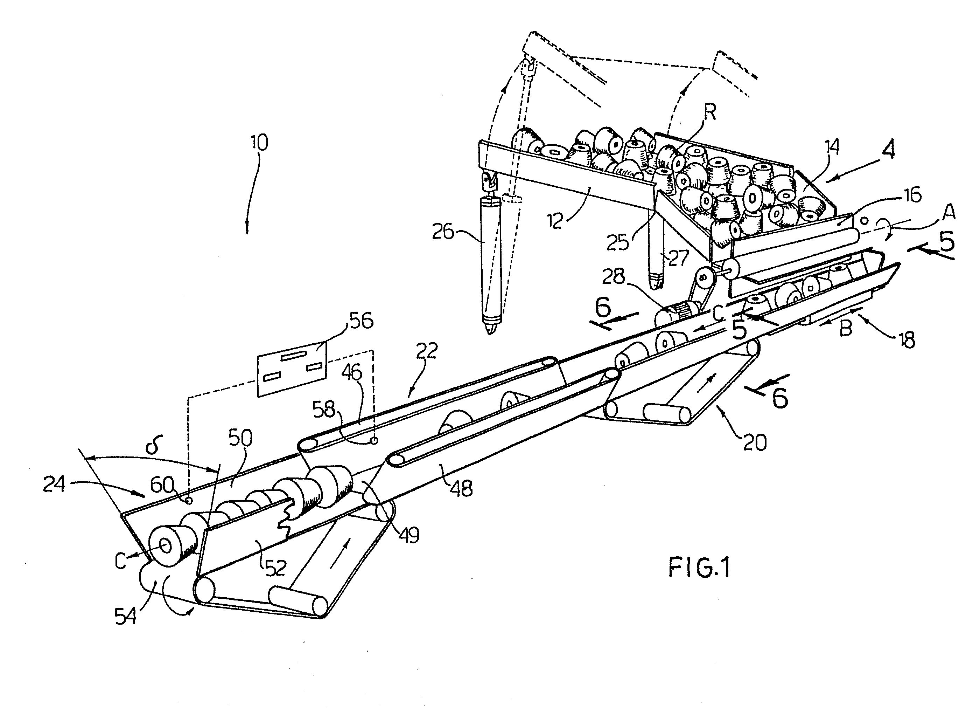

Referring first to Figs. 1 to 6, a system or plant according to the present application comprises a reel aligning and ordering unit, shown as a whole at 10. This unit 10 comprises a first inclinable table 12, a second inclined table 14, a rotary drum 16 having radial blades, a first and second reel feeding sections, respectively indicated at 18 and 20, a reel ordering section 22 and a supplying section 24.

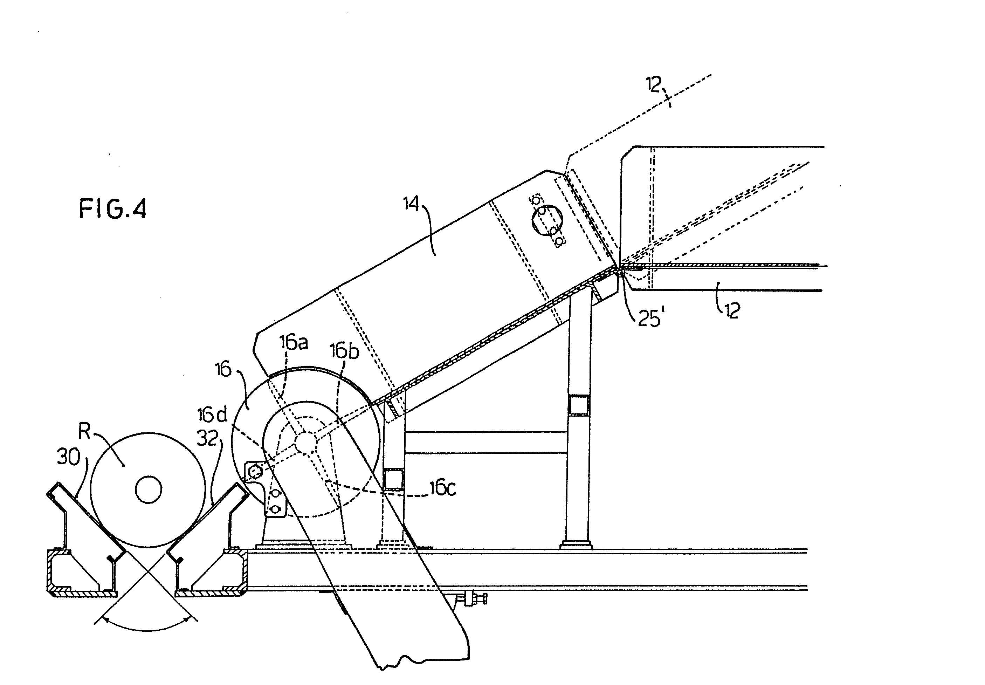

The inclinable table 12 is hinged, according to an axis fixed at 25, to the fixed or stationary table 14 and is movable by the cylinder piston units 26 and 27 between a substantially horizontal lowered position, shown by full line in Figs. 1 and 4, and an inclined raised position, shown by dashed lines in said figures. The fixed or stationary inclined plane or chute 14 has sufficient slope to allow for reel lowering by gravity. Both of said planes 12 and 14 have relieved longitudinal edges to receive the reels.

Just downstream of the inclined plane or chute 14, the drum 16 is rotatably mounted about a horizontal axis, and the rotation thereof is controlled by motor 28. Said drum 16 has four longitudinal tabs or vanes 16a, 16b, 16c and 16c, spaced apart from one another by about 90°, to define therebetween spaces for receiving reel rows. Drum 16 rotates in the direction shown by arrow A intermittently through arcs of 90°, to alternately present to said inclined plane or

BAD ORIGINAL

chute 14 one of the spaces between the longitudinal vanes.

Downstream of drum 16 a first feeding section 18 is provided. This section comprises two guide plates or walls 30 and 32 arranged at an angle to each other; generally the angle therebetween ( ) is about 90° and the walls are arranged at a distance therebetween such as to support a reel R however arranged to bear on both said plates or walls.

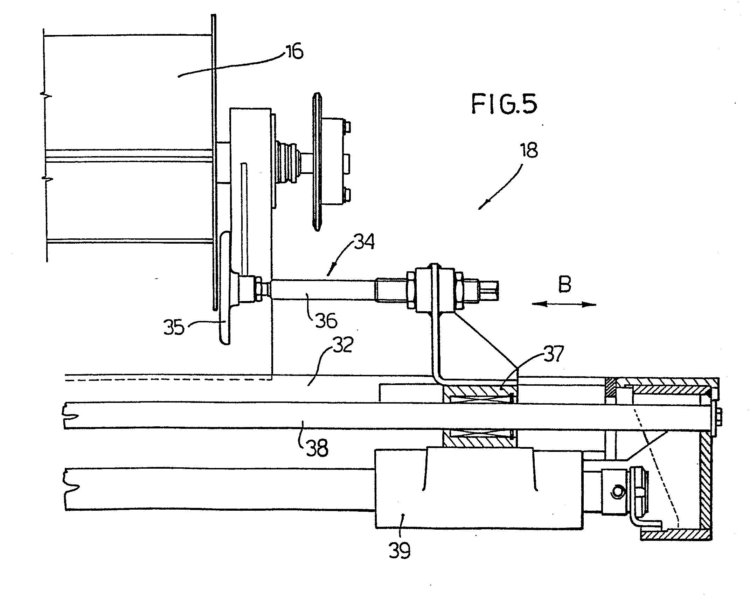

A pusher device 34 (Fig. 5) is placed in said first feeding section 18 and comprises a pan or plate pusher member 35, integral with a rod 36 carried on a bush 37 sliding on guides 38. The movable member of a cylinder piston unit 39 is integral with bush 37 to cause the pan or plate to move to and fro according to arrow B. The position of the pan or plate is such that in its forward movement it can interfere with the reels on plates 30 and 32 to exert a pushing action thereon.

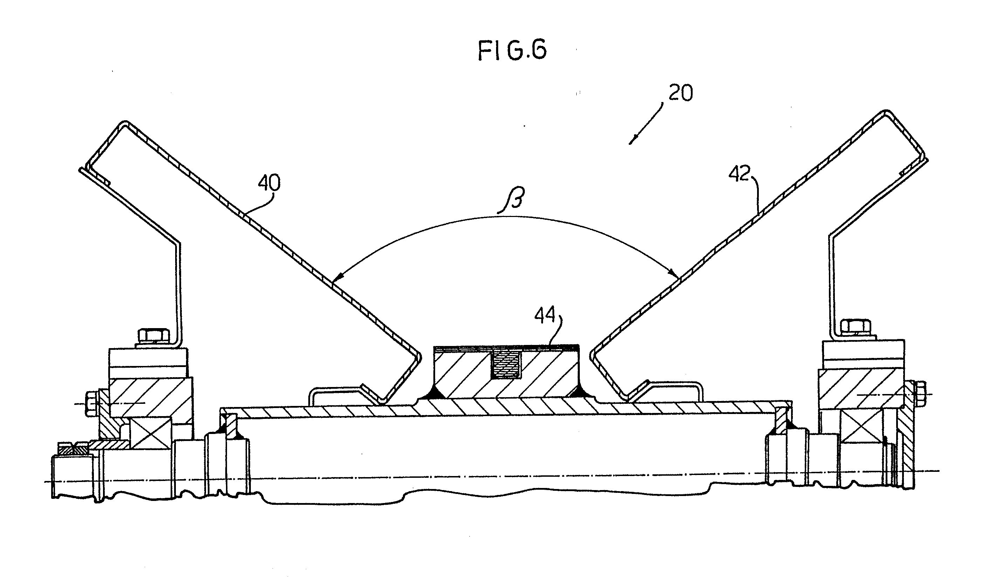

The second feeding section 20 (Fig. 6) comprises two side guide plates or walls 40 and 42 with an angle therebetween, and a conveyor belt 44 on the bottom of the space defined by said walls. The angle is larger than the above defined angle and the arrangement of the plates or walls is such that the reels are supported as bearing on the belt 44. This belt 44 moves according to arrow C of Fig. 1 at a higher speed than the feeding speed of pusher 34. The third reel feeding section 22 comprises two side belts 46 and 48 arranged at an angle to each other as seen in cross-sectional view; a bottom 49 may be provided or not; the arrangement of the belts is such as to ensure that the reels are supported on said belts, preferably without coming in touch with the bottom. An orienting device (not shown) cooperates with said section 22 and for example is of a type according to a copendent application of the same applicant.

The section 24 comprises side guide plates or walls 50 and 52 inclined to each other according to an angle and a conveyor belt 54 on the bottom, the useful stroke of which is in the above mentioned direction C.

A per se known type of control device 56 with photocells 58 and 60 stepwise intermittently operates the belt 54 whenever a reel is drawn from downstream side of section 24.

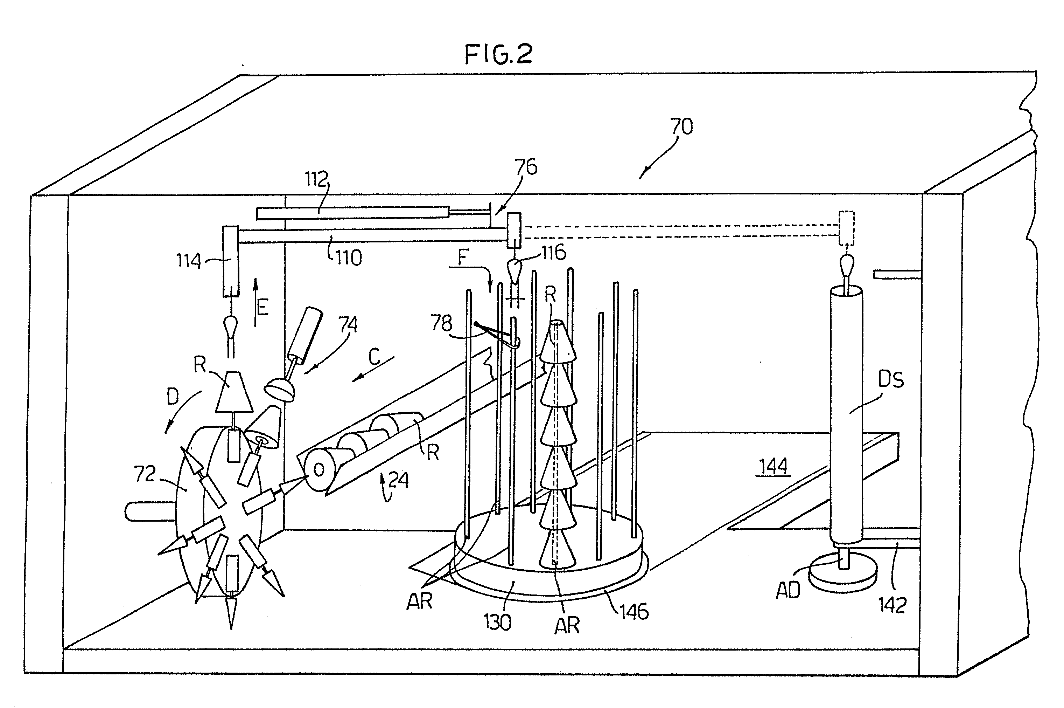

Downstream of said section 24, the system comprises a dyeing basket loading unit, indicated at 70 and schematically shown in Fig. 2. It comprises a reel drawing-positioning apparatus, indicated at 72, a skirting apparatus 74, and preferably also a transfer apparatus 76; a centering or centering lifting apparatus 78; and an apparatus for applying reel clamping devices.

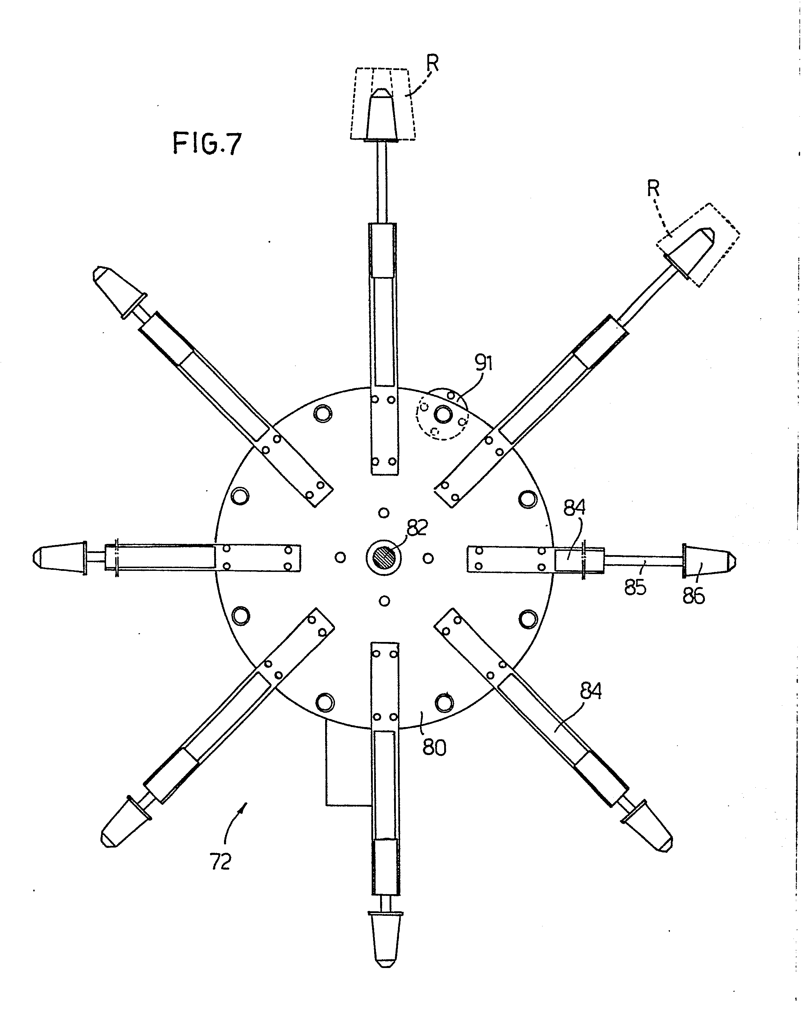

The drawing-positioning apparatus, hereinafter also referred to as wheel, is better shown in Figs. 7, 8, 9 e 10.

It comprises a central body 80, indexed about an axis 82, preferably but not necessarily horizontal. Said body 80 carries radial arms, indicated at 84, angularly equispaced, each of which comprising an extensible length 85, generally the stem of a cylinder piston unit. Each stem 85 has secured thereto a reel gripping member 86, for example of conical shape.

Some reels R are shown by dash lines in Fig. 7.

The apparatus 72 is indexed in any known manner. A stop device 91 is provided to stop the wheel at any desidered angular positions.

Preferably, the rotation is carried out through arcs of 45°. A member 86 draws a reel from the feeding section 10; rotates through 45° to carry the reel to a skirting station (to be described in the following); then rotates through 45° still in the same direction (arrow D in Fig. 2) to carry it to a drawing station, where it is taken or gripped by the apparatus 76.

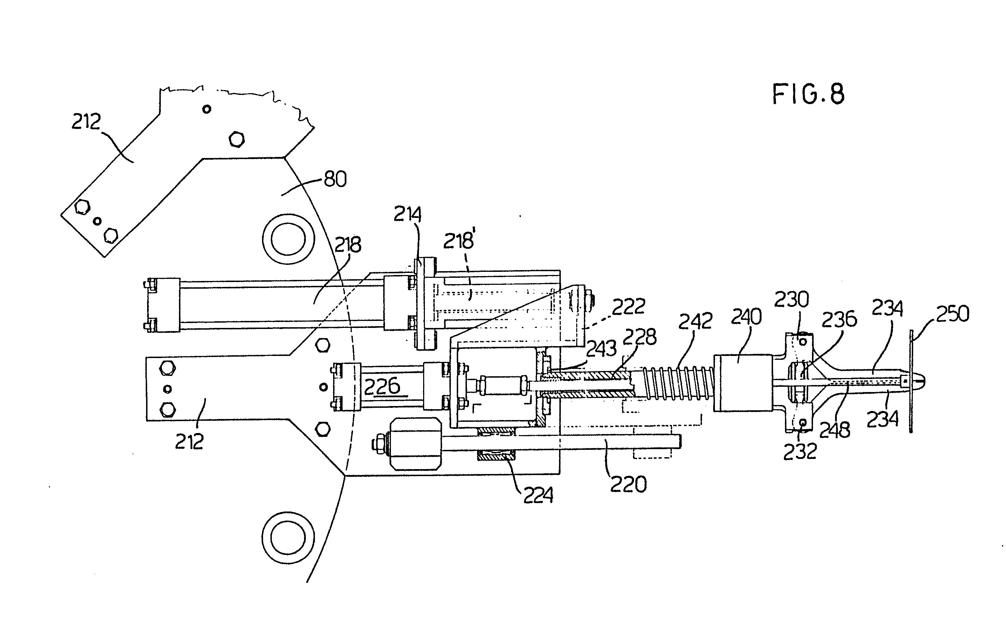

In Figs. 8 to 10 an embodiment is shown for a gripping device on the drawing-positioning apparatus 72, as an alternative to said member 86.

At a plurality of angularly spaced apart positions, body 80 carries a plate 212 integral therewith. By means of one or more brackets 214, a cylinder piston unit 218 or other feeding means is carried on said plate 212. This plate 212 has also secured thereon a guide 220, in the form of a bar with axis substantially parallel to the axis of said cylinder piston unit 218.

A frame 222 is integral with the stem 218' of said cylinder piston unit 218 and is guided to move on the guide 220 by a bearing 224. Therefore, said frame 222 is horizontally movable in Fig. 8.

Frame 222 carries a cylinder piston unit 226 (or other operating means) and a sleeve 228 arranged coaxially with the stem of said cylinder piston unit. A cylinder-piston stem 228' is slidable relative to the sleeve. The latter carries at the end a block 230 having two or more lobes, preferably three lobes or parts generally angularly equispaced apart from one another. Each lobe carries a

0113126

respective jaw 234 pivoted at 232. In a side view, each jaw 234 is of angled shape, and preferably has a length of outer surface 234' indented or anyhow roughened; each jaw also has an operating foot 234" to cooperate with a recess or circular groove in a control head 236 integral with said stem 228'. A reel R has a core A with a hole F. With the arrangement just described, it clearly appears that the feeding or forward movement of each engagement element or device to enter the reel R is determined by the above cylinder piston unit 218. The cylinder piston unit 226 controls the spreading or opening of the jaws 234 (engagement position) or closing thereof (disengagement position).

According to a further feature, a sliding body 240 is carried on sleeve 228 to axially slide thereon under the action of a spring 242, extended between an abutment 243 on the frame and an abutment 244 on said body. At opposite position to said abutment, the body has a shoulder facing the block 230.

A small rod or lever 246 is integral with at least one of the jaws 234 and has an angled end facing the device axis. Rods or bars 248 are integral with said sliding block 240 and have a pusher 250 at the end. Each bar 248 is placed in the dihedral defined by the two jaws. The pusher is generally in the form of a ring or flat annulus to be movable about the jaws. However, in a modified embodiment the device could be made without members 240, 242, 248 and 250.

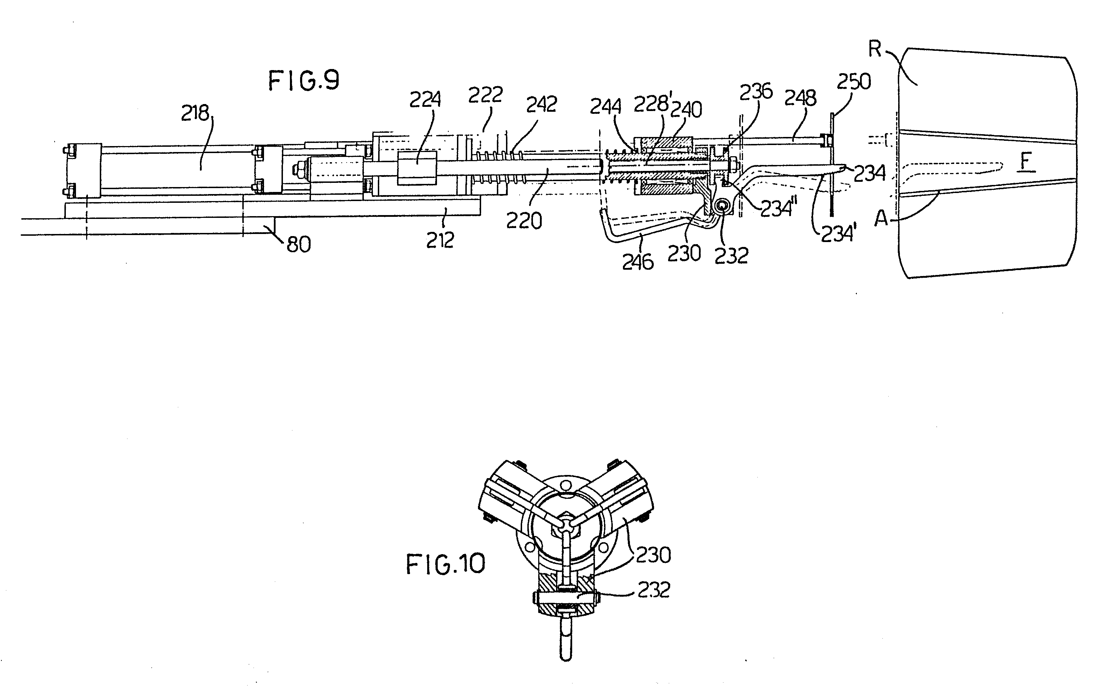

When, by the cylinder-piston unit 218, the forward movement or feeding of the jaws is caused within the hole F of the core A of a reel R, the pusher 250 and body 240 are moved to the left, as seen in Fig. 9, against the spring 242. Then the jaw opening is caused by the cylinder piston unit 226 with the stem 228'. This movement causes the lever 246 to engage against the shoulder of the body bearing the spring pressure or force (dash dot position), so that until the jaws are opened, the pusher is firmly retained at retracted position. Then, the jaws with the reel are displaced to the desidred position.

5. For reel unloading or delivery, the jaws 234 are closed by the cylinder piston unit 226. This causes the immediate release of the lever 246 of the body shoulder and therefore said body 240 is rapidly rightward moved as urged by the spring, thereby imparting a push to the reel.

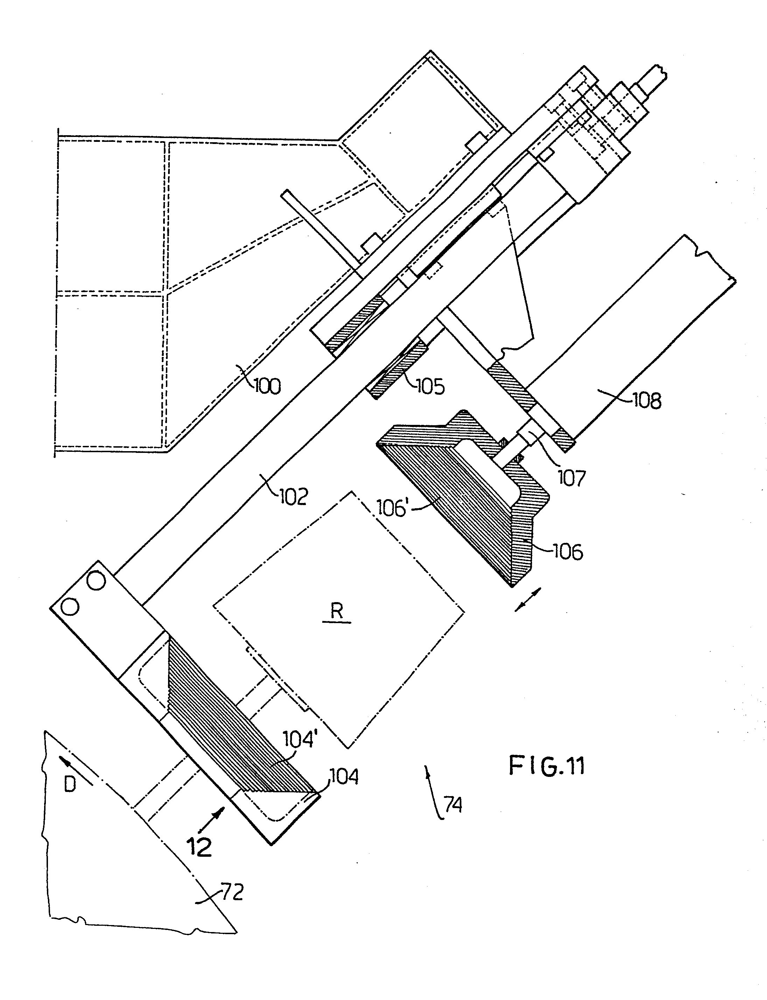

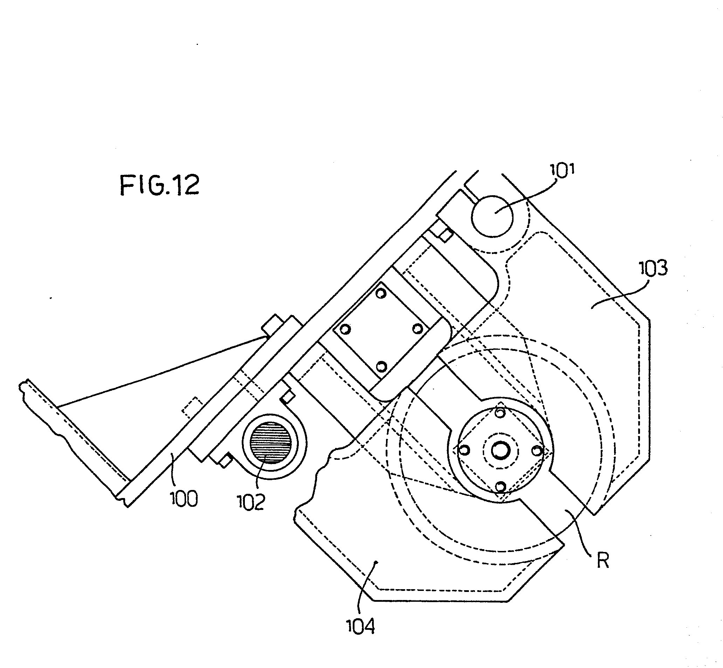

Referring now to Figs. 11 and 12, the skirting device 74 will be discussed about.

The wheel 72 in Fig. 11 is schematically drawn by dash lines. The position of a reel R carried on the wheel in the skirting station is also shown by dash lines. The skirting device 74 is stationary relative to the wheel axis and generally arranged to cooperate with a position of the reel at 45° relative to the gripping position, which is also horizontal. On a fixed framework 100, said skirting device comprises a pair of parallel arms 101 and 102, each of which carrying a lower skirting halfpan or plate, 103 and 104, respectively; each halfpan or plate is realized with the characteristic stepped cavity, such as 104', and covers slightly less than one half of the reel facing area, so that a passage is left between the two half-pans or plates for the incoming and outgoing reel carrying stem upon rotation of the wheel 72 according to arrow D. The arms 101 and 102 are slidable according to the axis thereof in bushes or sleeves, of which one is shown at 105, and are controlled by cylinder piston unit or the like. In front of said half-pans or plates 103 and 104, and spaced apart therefrom, an upper pan or plate 106 with the characteristic stepped circular cavity 106' is arranged. The pan or plate 106 is integral with a stem 107 of the cylinder piston unit 108, so that both the lower half-pans or plates and the upper pan or plate can be applied and pressed on an interposed reel R for skirting.

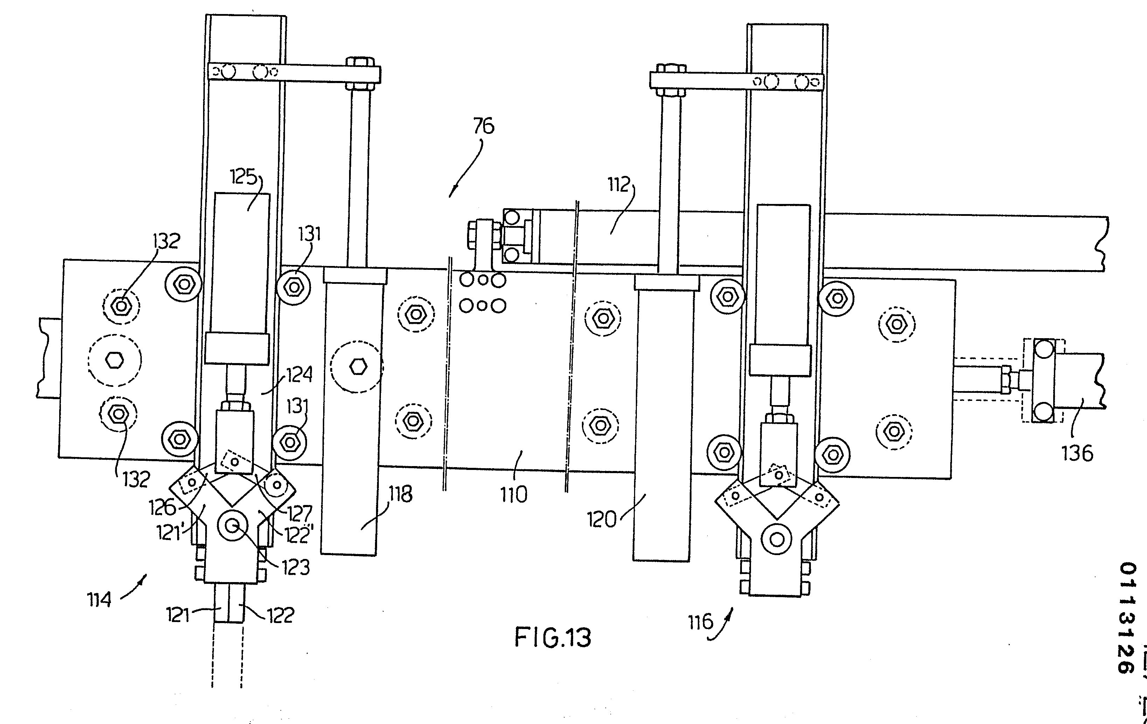

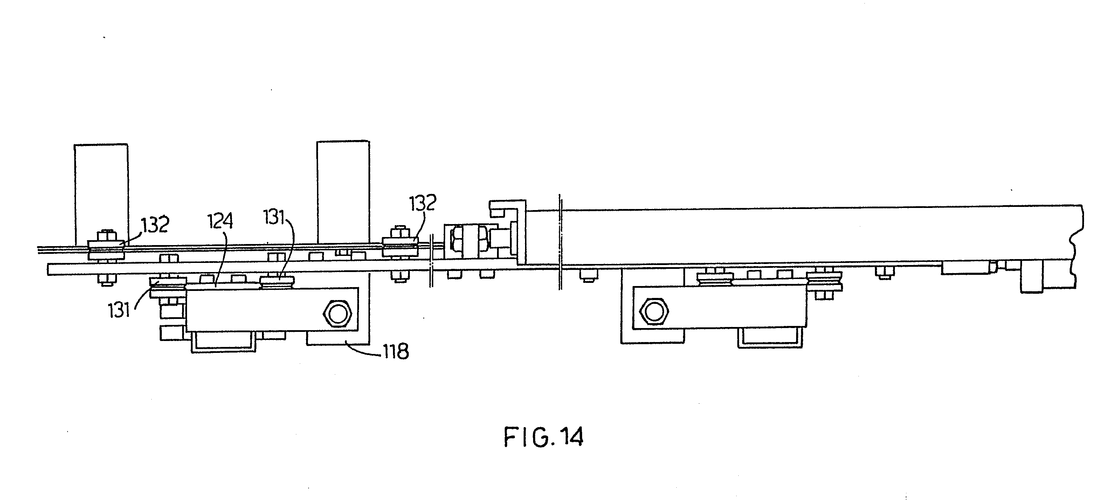

5.      Referring now to Figs. 13 and 14, the transfer apparatus 76 for transferring reels and spacing discs will be described.

The transfer apparatus 76 comprises a crosspiece 110 movable on a fixed structure (not shown) along its longitudinal axis, generally horizontally, by the cylinder piston unit 112. Said crosspiece 110 carries a first gripping member or pliers 114 and a second gripping member or pliers 116 spaced apart from each other and vertically movable by cylinder piston units 118 and 120, respectively. In an embodiment, only the member 114 will be hereinafter described, since member 116 is substantially similar. Said member 114 comprises a pair of spreadable rods 121 and 122, pivoted to the pin 123 on a slider 124 and connected to an opening and closing cylinder piston unit 125 (carried on the slide), by a pantograph system comprising angled extensions 121', 122' of the rods and link rods 126 and 127. The cross dimension of the rods is such that they can be slipped into the spaces left free between the rigid core of a reel R slipped onto a rod AR of a per se known dyeing basket 130. Such known basket rods are of substantially three-lobed shape in cross-section, while the reel core is circular in cross-section. Preferably, the lefthand pliers rods 114 are preferably shorter to engage the hole portion in the reel core which is left free when the reel is on a gripping device of the wheel apparatus 72.

A vertical guide system for said slider 124 provides splined rollers 131 for engagement with a corresponding profile on the slider. A similar guide system with rollers 132 is provided for a corresponding profile integral with the movable crosspiece 110.

A second horizontal piston 136 provides for shock dampening.

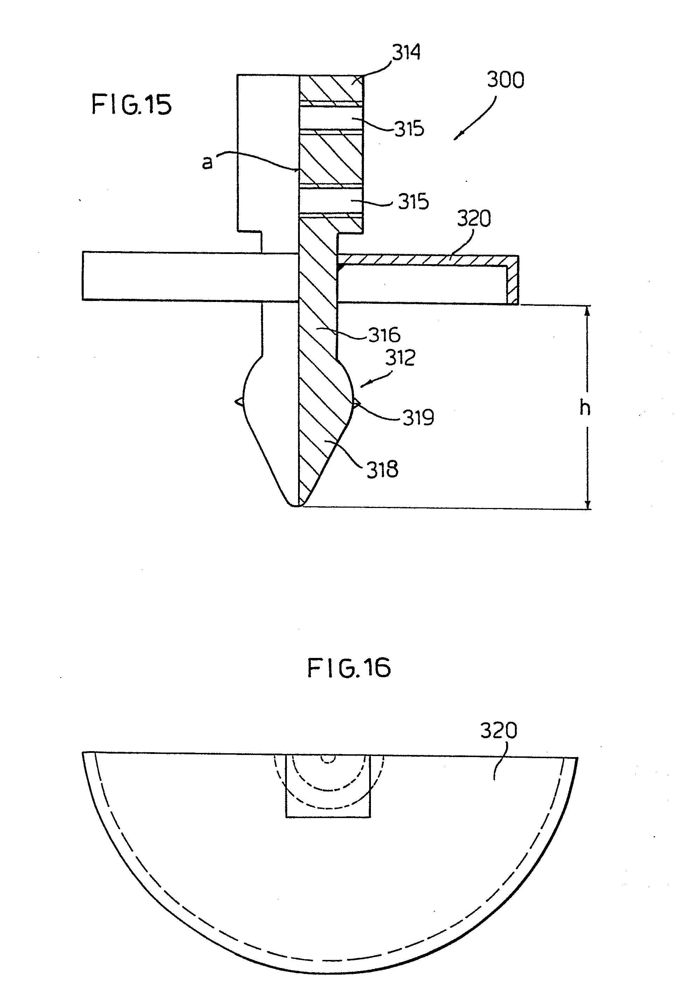

Figs. 15-18, and 19-20 respectively show variants to the gripping members or pliers 114 and 116.

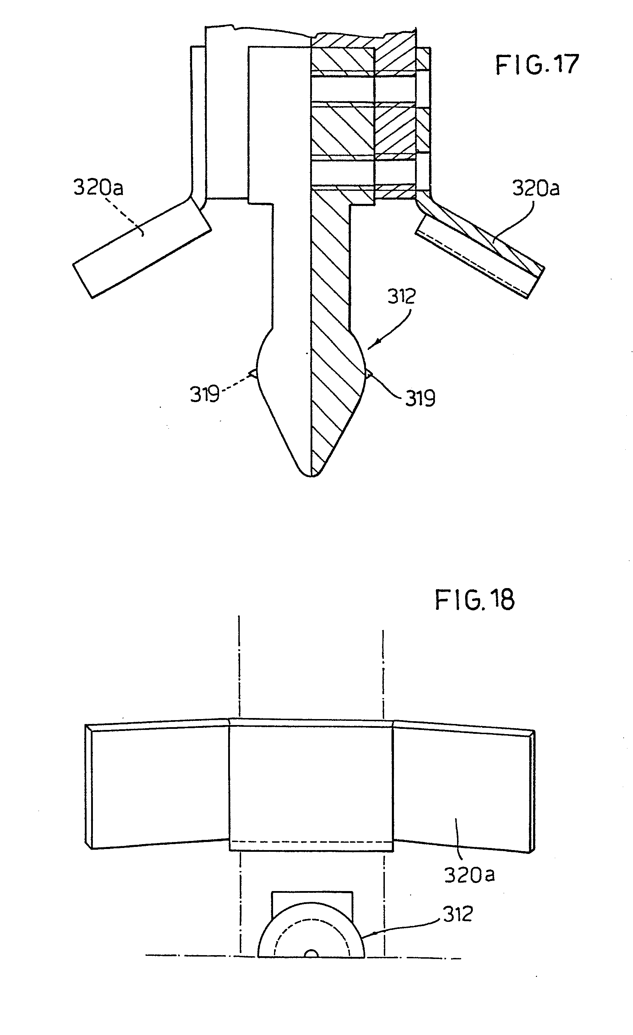

A reel gripping member 300 having a longitudinal axis $a$ comprises a plurality of jaws 312, generally two or three. The jaws are movable between a closed position (Figs. 15) of reel disengagement, in which they are against one another, and an open position (not shown) in which they engage the inner wall of a reel core. Each jaw comprises a tang portion 314, which can be secured by screws engaging the threaded holes 315 to an end element of a pantograph system, partly shown in Fig. 17, and not described as per se known for the operation of pliers and jaws. The jaw also comprises a stem 316 and a half-bulb engagement portion 318 with outer surface relieved with respect to the stem and of rounded tapered shape. Teeth 319, generally one for each jaw, outwardly extend from the bulb shape.

A half-circle pan or plate 320 is secured on the stem of each jaw, with the edge relieved to the jaw gripping end. The pan or plate 320 serves as an abutment or stop to the jaw slipping and contributes to retain the reel on the jaw at correct position. The distance $h$ between the pan or plate and the end of the engagement portion is generally substantially less than the height of a reel, so that reels still slipped on a rod and retained lifted thereon can be engaged.

According to the variant of Fig. 17, the profile of the stem portion and bulb portion 316 and 318 remains identical, while for

0113126

each jaw the pan or plate 320 is replaced by an inclined bent sheet portion (Fig. 18) also serving as an abutment or stop for the reel. It is generally deemed that a member as shown in Figs. 15 and 16 is more suitable for conical reels, while a member as shown in Figs. 17 and 18 is more suitable for cylindrical reels.

By driving devices (not shown) the gripping member is lowered into the hole of a reel core until the reel comes in touch with the abutment. Then, the jaws are widened out to firmly engage the inner wall of the core, such an engagement preventing the reels from oscillating, which oscillations could cause the jamming of the automatic process for reel handling.

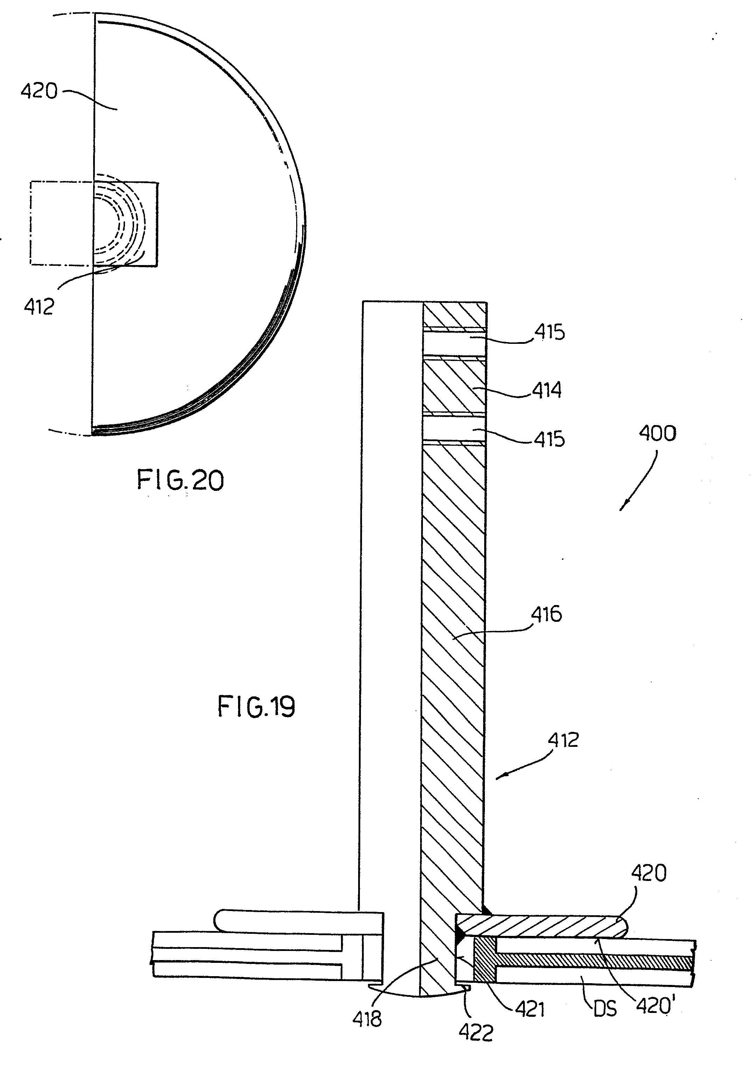

A gripping member 400 for spacing discs DS (one of which by only way of illustration is partly shown in Fig. 19) comprises a plurality of jaws 412, generally in a number of two. Each jaw comprises a tang portion 414, a stem portion 416 and a gripping head 418. The tang portion is intended for connection by screws engaging in threaded holes 415 to an end element of a pantograph system (not shown, because per se known for use as control for gripping members), which system controls the jaw opening and closing. The gripping head 418 comprises a stop ridge 410, generally but not necessarily in the form of circular crown portion and generally including a pan or plate welded to the member and having an abutment surface 420', with a larger diameter than that of the hole of disc DS. The gripping head also comprises a recessed seat 421, generally of circular surface, and a retaining ridge or end tooth 422 radially extended, which is also generally but not necessarily in the form of an arc of circle, as seen in plan view. The diameter of the end tooth is at least slightly less than that of the disc hole. The lower surface of said head 418 is preferably convex or tapered to assist in centering a disc to be taken up.

In the preferred embodiment, each jaw has the ridge or pan of semicircular shape, and also the seat and ridge 422 are of semicircular shape, so that each of these elements will form a complete circle when the jaws are approached to each other; however, other shapes in plan view are possible both for the stop ridge and tooth and seat.

Preferably, the two jaws join each other along an axial plane of the member.

In operation, the gripping member is lowered on a pile of discs and by the gripping head 418 is inserted into the hole of an upper disc by a distance as determined by the pan or plate 420. The jaws open and the head engages a disc DS. The engaged disc is lifted, while being retained within the seat between the ridge 420 and tooth 422, and can be easily transported without any oscillations.

Preferably, the device 76 operates simultaneously with the pliers 114 and 116. While the pliers 114 (arrow E in Fig. 2) drawor withdraw a reel from the wheel 72, the pliers 116 places a spacing disc on a rod AR when filling up the dyeing basket 130 (position shown by full line in Fig. 2); then the crosspiece moves to bring the pliers 114 (arrow F) on the vertical of rod AR to unload the reel and the pliers 116 on the vertical of a magazine rod 140 supporting the spacing discs DS for the reels (dashed position). It is possible to preset the pliers 114 and 116 at a fixed distance from each other and the distances between the devices 72, 130 and AD are accordingly set, or a change in distance between the pliers 114 and 116 can be preset. In order to lift the piles of discs DS, an arm 142 is provided, which can be lifted in any known manner.

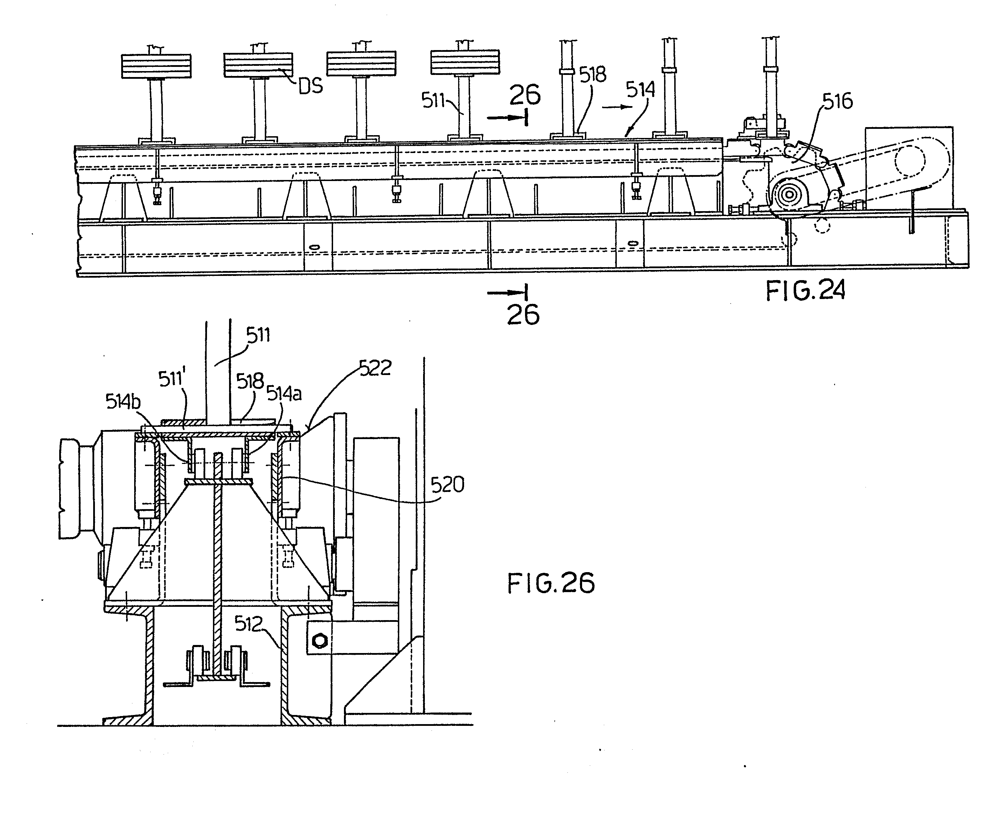

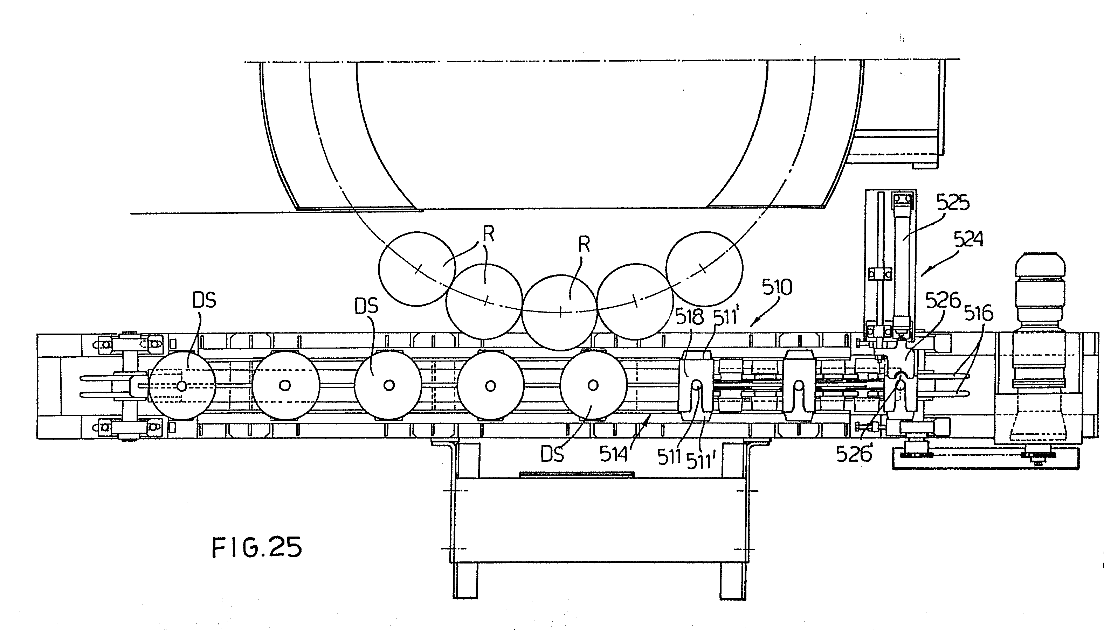

Should the discs or pans carried on a single store rod be insufficient, a magazine rod supplying apparatus 510 is provided, as shown in Figs. 24-26.

The magazine rods or disc-carrying rods are indicated at 511. Each magazine rod has a foot 511' comprising an elongated plate.

The supply apparatus 510 for magazine rods 511 comprises on a fixed structure 512 a continuous conveyor, such as a plate chain conveyor means 514. Preferably the conveyer 514 comprises two chains 514a and 514b movable as a unitary body. A movement direction is shown by the arrow in Fig. 24. The chain means turns about pairs of gear wheels 516, of which a pair such as that shown in the figures will obviously be the drive pair for the chains.

Pockets 518 are mounted on longitudinally spaced apart plates of the chain conveyor means (for example, as shown in the figure, on one plate out of three); each pocket comprises a flattened sleeve, having a through opening of dimensions for receiving the foot 511' of a rod 511, and having a U-shaped slot at the top to receive the rod 511, enabling the sliding thereof to a central position on the conveyor. Both the sleeve opening and slot preferably have an axis transverse to the chain forward movement. The size ratio of the rod foot and sleeve 518 is such that the foot projects on one and the other end of the sleeve, that is on one and the other side of the chain means, so as to bear on side guide rails 520 made integral with the fixed framework 512 and in the case coated with a strip 522 of polytetrafluoroethylene or other antifriction material. Of course, the shape of the engagement seats or pockets for the rod foot could be other than that shown.

The advancement of the chain conveyer means 514 is stepwise, generally each step being equal to the center distance between one pocket and the next pocket.

The apparatus may also comprise ejecting means 524 including a cylinder piston unit 525 moving transversely of the chains; the movable element of the cylinder piston unit carries a pushing head 526, preferably with a seat 526' for partially enclosing the contour of rod 511.

Initially, the apparatus 510 is loaded with a plurality of disc carrying rods, for example filled with discs. The discs of a first rod 511, at predetermined position relative to a dyeing basket, the rods of which (orthogonal to the drawing sheet in Fig. 2) are filled with reels R, are first gripped one by one and positioned on the reels. When the rod is depleted, the chain means moves forward by one step and the discs are drawn one by one from a next rod 511. The unloaded rods 511 move to the ejector 524 which provides for removal thereof from the pockets. The apparatus may also be used for reel unloading; in such a case it is loaded with empty rods, and the latter are then filled and ejected.

In conventional systems the reels piled up on each rod are clamped by clamping devices known in the art.

Without going into unnecessary operating details, the known reel clamping device comprises a block, provided with a through opening of sufficient size for the rod passage, and an operating lever etended from the block, as well as a spring means for pressing against the reels a retaining collar. With the clamping device arranged with vertical axis, as generally used, a lifted position of the lever corresponds to a free condition of the device, whereas a lowered position of the lever, as obtained by gravity in the absence of external forces, corresponds to a clamped position of the device.

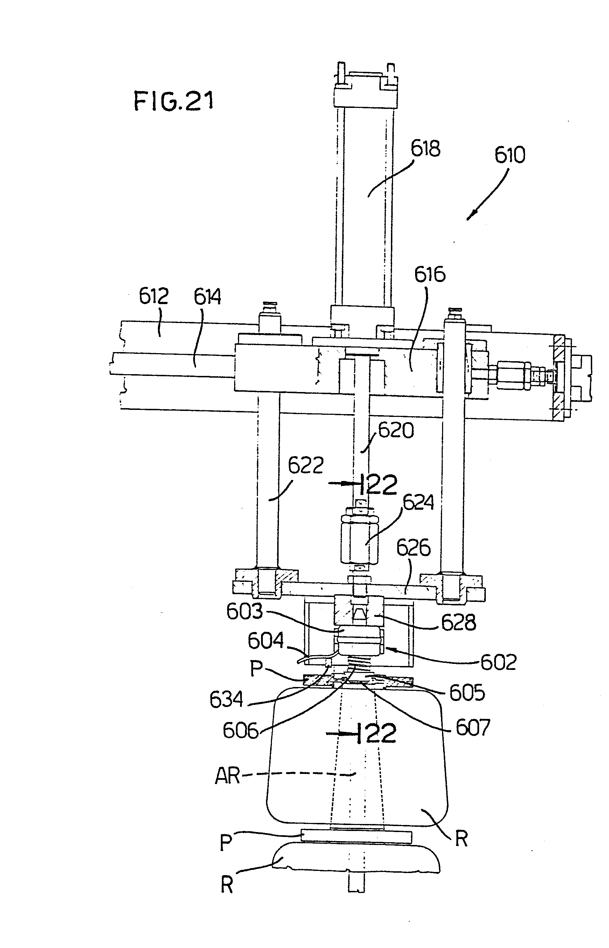

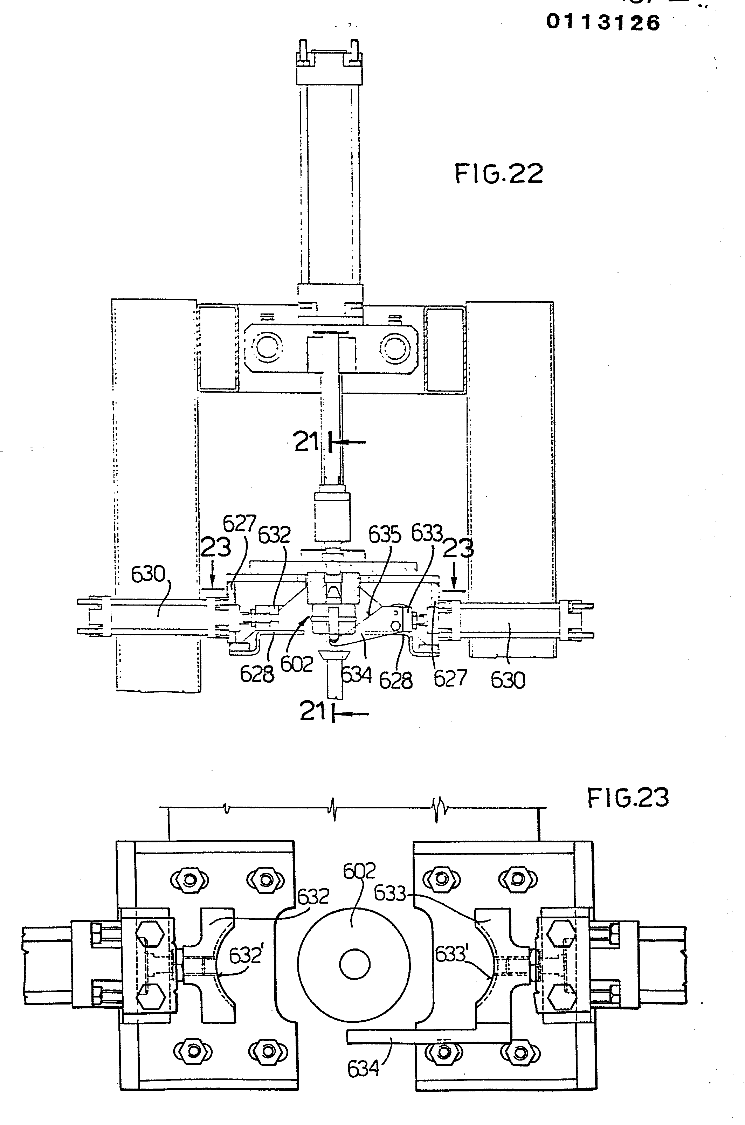

In Figs. 21, 22 and 23, reference numeral 602 denotes a conventional clamping device, comprising a block 603, a lever 604, a cone collar 605 urged by a spring 606 about a cylindrical extension 607 of the body. The lever is shown at lowered clamping condition. Reference AR indicates a reel carrying rod of a dyeing basket, R a reel slipped onto the rod at a top end position, and P a spacing pan or disc for the reels of common use.

The applying-removing apparatus 610 for devices 602 substantially comprises a fixed framework 612 having a guide or pair of guides 614. A carriage 616 is movable on the guide 614 under control of a cylinder piston unit or other operatinG means, not shown. This carriage 616 carries a cylinder piston unit 618 or other operating means, the movable element 620 of which is vertically displaceable and also carries vertical guides 622.

By a linkage 624 a frame 626 is connected to the end of the stem or movable element 620, which frame 626 is guided for vertical movement on guides 622.

Said frame 626 has a centering or positioner member 628 secured thereto, generally comprising a cylinder with opening for positioning with reduced clearance about the end of rod A.

Frame 626 also has two opposite walls 627 at the bottom terminating with guide walls 628. Each wall 627 carries an operating means 630, for example a cylinder piston unit, with the movable element integral with a jaw, the two jaws being shown at 632, 633. The jaws 632, 633 can slide near and away from each other.

Secured to one side thereof, said jaw 633 carries a cam or tab 634, having an inclined top surface 635, which is lowest at the farthermost end of the jaw and highest at the nearest end. Each of the jaws have a gripping surface 632' and 633' for embracing part of the circumference of the device 602.

For the application of each device 602, when the slider 616 is displaced, for example to the left on guide 614, the jaws 632 and 633 draw a device 602 presented at the top by a magazine column (not shown) of devices 602 piled up on a rod.

The position of the cam 634 is at the lever 604 with respect to the block 603 of said device 602, so that the cam engages the lever, which is thereby retained at lifted condition and the device is in unclamped free condition.

While suitable position abutments of a per se known type may be provided, said slider 616 moves along the guide 614 to be arranged on the vertical of a rod AR filled up with reels R. The cylinder piston unit 618 lowers the frame 626 to slip the centering member 628 about the end of rod AR. Possibile position adjustments are allowed by articulation 624. As the centering member 628 is fixed to the frame 626, then the position of the jaws and cam relative to the device is automatically established. Then, the jaws 632 and 633 are spread out to each other to allow for lowering of lever 604 by grafity as well as block 603 of the device 602. Thus, the apparatus 610 is lifted.

The removal of the device 602 is carried out as follows: the cylinder piston unit 618 lowers the frame 626 on the rod AR; the jaws 632 and 633 move near each other, so that the lever 6C4 is lifted on the profile 635 of cam 634, thereby releasing the device 602 which, as gripped by the jaws, is then lifted away.

5. A support or mounting is provided for the dyeing basket 130, comprising a slide 144 (Fig. 2) and an indexing fixture 146 angularly snapwise movable or indexed to present in turn at loading position each of the reel carrying rods AR. The slide and indexing fixture will not be herein described in detail as they may be of any known type. In order that each rod AR should be held at upright or straight attitude at the time of reel loading, a centering apparatus 78 in provided, to be discussed about in the following in connection with reel unloading.

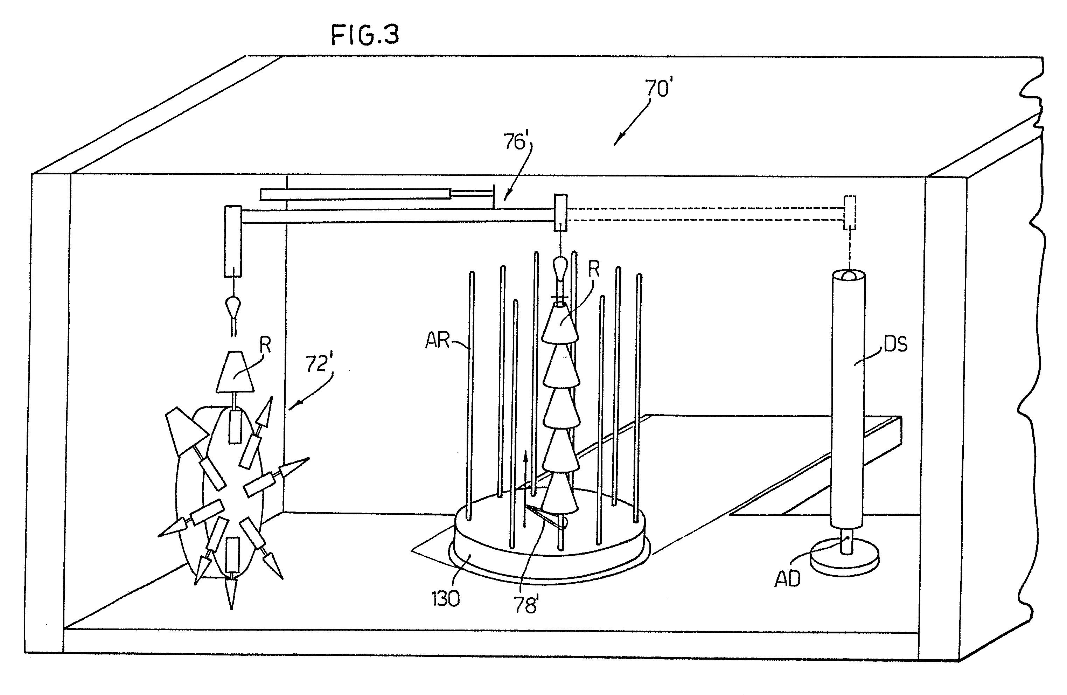

In connection with the unloading of a basket after dyeing, use may be made of the same loading unit of Fig. 2. However, it is preferred to have a separate basket unloading unit 70', schematically shown in Fig. 3.

In addition to a reel centering-lifting apparatus 78' similar to apparatus 78, this unit 70' comprises a transfer apparatus 76' which is substantially identical to apparatus 76 and therefore not further described, and a wheel apparatus 72' similar to apparatus 72 and not further described.

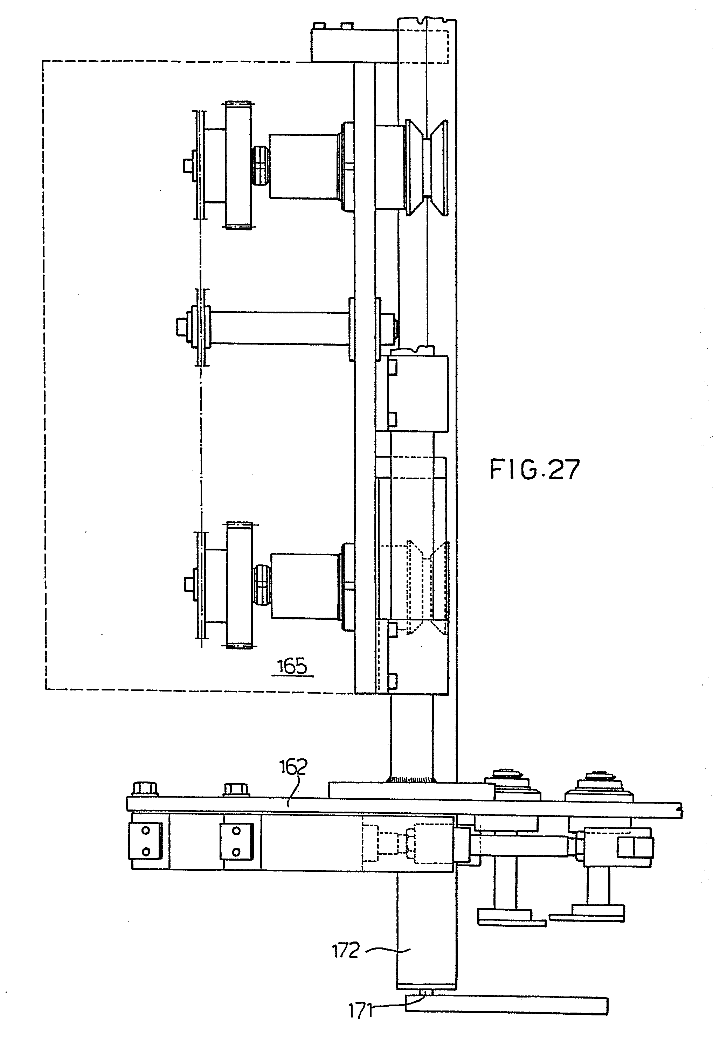

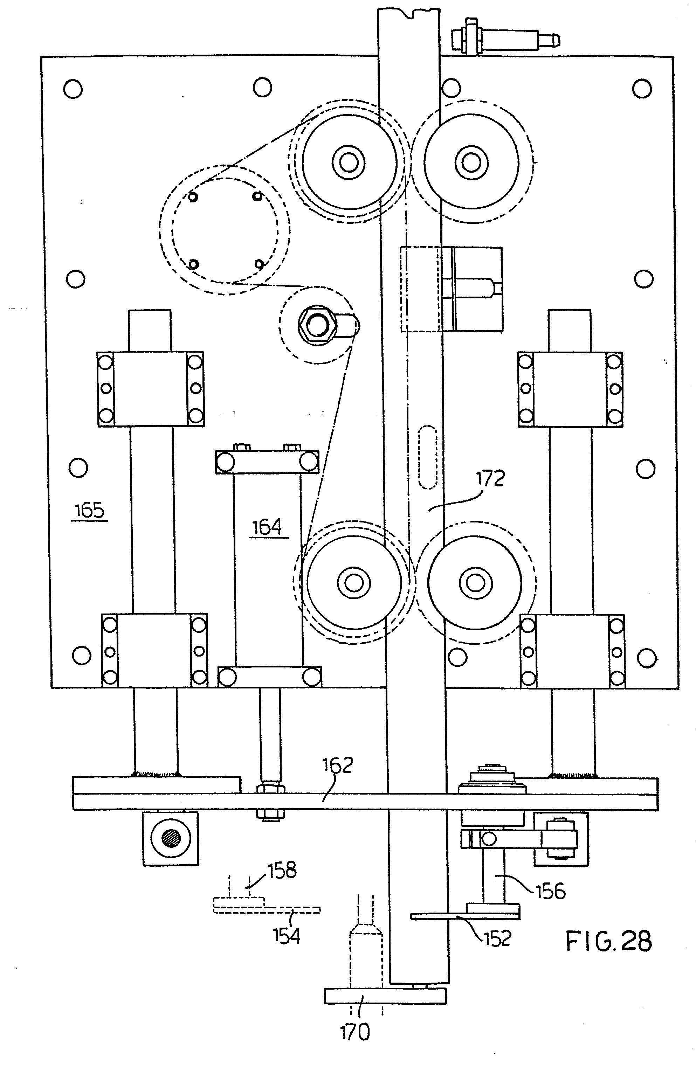

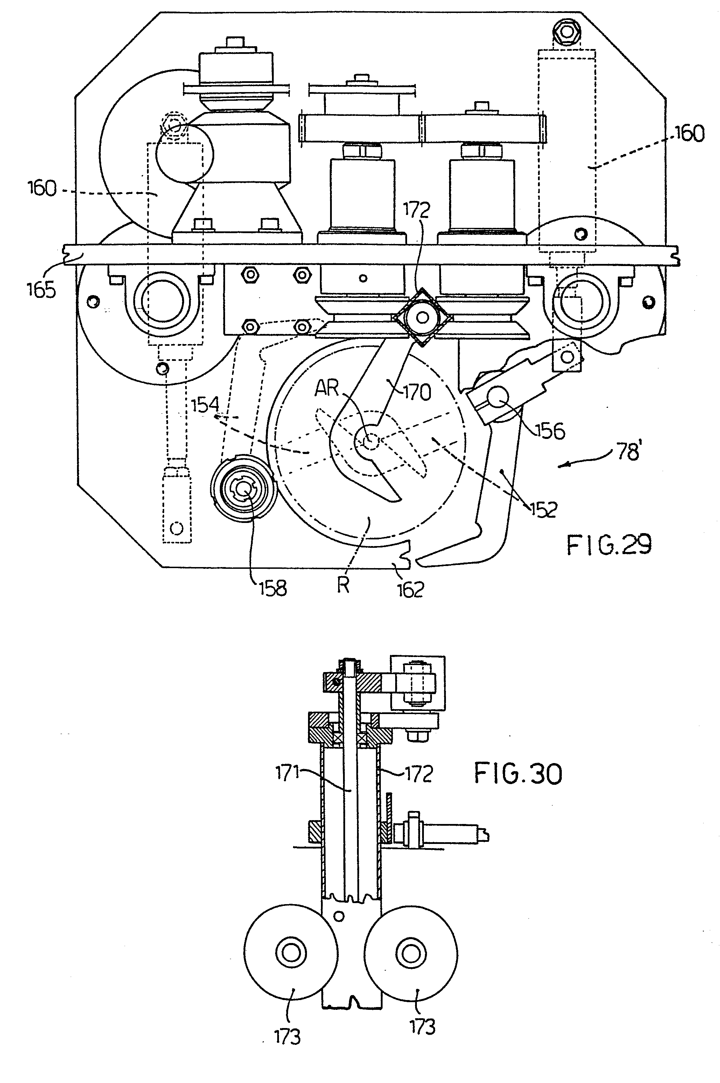

Referring to Figs. 27 to 30, the centering-lifting device 78 or 78' will now be described. It comprises two centering arms 152 and 154, each of which rotatable about its own vertical pin 156 and 158. The arms have a notch or cavity equal to a semicircumference of rod AR and in Fig. 29 are shown by thicker line at widened position and by thinner line at approached position about a rod AR. Opening and closing of the arms is caused by a cylinder piston unit, such as 160. The centering arms and opening pistons thereof are carried on a plate 162 vertically movable by cylinder piston unit 164 located on a fixed plate 165. The reel lifting means comprise an arm 170 having a notch or cavity of larger circumference than that of rod AR. Said arm 170 is rotatable about a vertical axis and liftable as desired. in the example shown it is carried on a stem 171, in turn rotatably carried within a tube of square cross-section 172. Rotatably controlled rollers 173 provide for lifting and lowering of said tube 172 and 171. The latter may be rotated as desired about its own axis within the tube, thus rotating said arm 170.

Said apparatus 78 is identical to apparatus 78', except that the reel lifting device may be dispensed with.

The operation of the system will now be described.

Treatment is carried out for reel from the spooler or packaging packs. A plurality of reels are simultaneously loaded by hoist and net on the loading plane or inclinable table 12 at the most various positions and may also be superimposed to one another. Upon loading, the operator activates the control of air flow to the pistons 26 and 27, which raise the table and cause the reels to slide and lie down on said table and on table 14 to the rotating drum 16, stopping thereat. When some number of reels has been achieved, the automatic control device 56 operates the motor of the rotating drum 16. The drum rotates and stops after a rotation of 90°. A proximity switch, not shown, de-energizes the motor and operates the piston 34.

In rotation, said drum 16 lies down a number of reals on the section 18 and piston 34 pushes the same, with reel axis at the most various positions, on the section 20 with the belt in fast forward movement. The simultaneous push action of the piston and particolar structure of section 20 arrange all of the reels with horizontal axis with respect to ground and spaced apart from one another. In case of conical reels, at this position the reels may have the major base or the minor base ahead, but they should have the major base ahead for correct gripping by the wheel device. A tilter device (in case of conical reels), here not shown in detail, cooperates with the section 22 to orderly arrange reels, at the outlet from section 22, aligned with the major base ahead. The station 24 operates intermittently, as the motor is controlled by the photocell 60 whenever a reel is drawn from the station 24. The reel enters said station 24 since it is provided with some kinetic energy imparted thereto by the conveyor belts 46 and 48, and the photocell 58 located on the belt 46, where the reels are spaced apart, senses the passage thereof.

The wheel like drawing-positioning apparatus 72 takes by each gripping means in turn said reels R. The drawing-positioning apparatus rotates through 45° carrying the reel to the skirting station. In such a station, skirting operation is carried out by means of half-pans 103 and 104 and pan or plate 106, which move near one another compressing the reel edges.

A further rotation through 45° of the wheel brings the reel to a position wherein it has a vertical axis, ready to be drawn and slipped on a rod AR of the dyling basket 130.

The pliers 114 of the device 76 draw the reel R. At the same time, the pliers 116 allow a disc previously gripped from the disc supply to drop on rod AR.

Then, the crosspiece of device 76 moves rightward (position shown by dashed line in Fig. 2) and at such a position the pliers 114 allow the reel to drop on the rod AR presented to loading, while the pliers 116 draw a new disc.

Thus, the cycle is continued to complete filling of a rod AR of the basket. A clamping device 602 in secured to the rod by apparatus 610, whereupon an automatic control provides to rotate the basket carrying slide to present the next rod to loading.

During loading, the centering apparatus closes the arms accurately positioning the rod end. After loading of each reel, the arms 152 and 154 open to allow the reel to fall down along the rod.

When the basket 130 is completely filled up with reels, the basket is introduced into an empty dyeing cabinet.

At unloading, the reels are lifted along each rod AR by the lifting device and are drawn from the rods AR by the apparatus 76' and slipped on the gripping members of the wheel 72'. The discs are removed and piled up on the rod AD by the disc pliers.

From the wheel 72' the reels may be positioned on hydroextractor cage.

OFFICINE MINNETTI

DI FEDERICO MINNETTI & C. S.a.s.

51018 PIEVE A NIEVOLE (Pistoia)

WHAT IS CLAIMED IS:

1. A process for handling of yarn reels (R), particularly in connection with loading thereof into a dyeing basket, characterized by comprising the following steps: supply of reels in bulk. alignment and ordering of the reels for arrangement thereof in succession one by one and all with the same attitude.

2. A process as claimed in Claim 1, characterized in that said reel alignment step comprises the steps of forward pushing the reels in a first section (18), as supported on two sides at an angle to one another; forwarding the reels in a second section (20), supported at the bottom and at a higher speed than in said first section, guided on the two sides by walls (40, 42) at a larger angle than in said first section.

3. A process as claimed in Claim 1, comprising the step of drawing the reels one by one as aligned and ordered, characterized in that said drawing operation is carried out by engaging the reels from inside the core thereof.

4. A process as claimed in Claim 1, comprising the further operation of transferring the reels (R) to a dyeing basket (130) and slipping the same on the basket rods (AR), arranging spacing discs (DS) between each reel and the next reel, characterized in that gripping of each reel is carried out by engagement of the reel inside, and that drawing of a reel for transfer to the basket occurs substantially simultaneously with the arrangement of a spacing disc on a reel previously positioned on a rod and reel arrangement on the rod occurs simultaneously with drawing of a spacing disc to be successively placed on said reel, and also by comprising the step of angularly rotating the basket through predetermined angles as a number of reels on a rod being loaded is achieved.

5. A process as claimed in Claim 1, further comprising the step of gripping each rod (AR) of the basket to retain it stationary and centered during reel loading or unloading.

6. A system for handling of yarn reels, characterized by comprising a reel alignment unit (10), including an inclined plane or chute (14) for the supply of reels in bulk; a rotating drum (16) having longitudinal vanes downstream of said inclined plane or chute for bulk supply of groups of said reels; a first feeding section (18) downstream of the drum, comprising inclined side walls (30, 32) and a feeding pusher (34) to and fro reciprocating; a second section downstream of the first section (20), comprising inclined walls (40, 42) and a conveyor belt (44) on the bottom; the arrangement and angling of the walls of the first section being such that a reel bears thereon; the arrangement and angling of the second section walls being such that a reel bears on the bottom conveyor belt.

7. A system as claimed in Claim 6, for frusto-conical reels and characterized in that the first section walls (30, 32) are at 90° to each other and the second section walls (40, 42) are at 102° to each other.

8. A system as claimed in Claim 6, characterized in that the belt (44) of the second section moves at a higher speed than the pusher (34).

9. A system as claimed in Claim 6, characterized by comprising a third (22) section following the second section with side walls comprising moving belts (46, 48) and arranged so that the reels bear thereon, and a fourth section (24) following the third section and comprising a movable feeding belt (54) which is provided with controlled intermittent movement.

10. A system for handling of articles, particularly yarn reels and particularly in connection with a dyling treatment, characterized by comprising a basket loading unit (70) of a dyeing cabinet, including a reel drawing-positioning apparatus (72), a skirting apparatus (74) and a transfer apparatus (76).

11. A system for handling of articles, particularly yarn reels, characterized by including a reel drawing positioning apparatus (72) comprising a rotary body (80) having reel engagement devices (86; 234) in radial arrangement and regularly angularly spaced apart from one another, each device being extensible from the body and being of suitable shape to engage the inner hole of a reel.

12. A system as claimed in Claim 11, characterized by said yarn reel gripping device comprises: jaws (234) movable between an open reel engagement position and a closed disengagement position, at open position the jaws engaging an inner wall of the reel core, and at closed position being clear of said inner wall; and means (226; 236) for jaw opening and closing.

13. A system as claimed in Claim 12, characterized in that said jaws (234) are in number of three, arranged about a longitudinal central axis according to radial planes which are angularly equispaced from one another.

14. A system according to Claim 11, characterized in that said device comprises a block (230) on which the jaws (234) are supported as pivoted for opening and closing movement, and also comprises operating feet (234") integral with said jaws, and said opening and closing operatin means (226) comprise an operating head (236) which is movable with respect to the block and engages said feet for the opening and closing of the jaws.

15. A system as claimed in Claim 11, characterized by further comprising a reel snap ejecting means (250).

16. A system as claimed in Claim 15, characterized in that said ejecting means comprises a pusher (250) supported on a block movable parallel to the axis of the gripping device; a resilient means (242) interposed between an abutment on the movable block and an abutment integral with the block of the gripping means; a clamping lever (246) fixed to a jaw to be displaceable betwer a retaining position of said sliding block, corresponding to open condition of the jaws, and a position engaged by the sliding body and corresponding to the jaw closing.

17. A system as claimed in Claim 11, further comprising a skirting apparatus, characterized in that the skirting apparatus (74) is located at a position of the reel drawing apparatus (72) and comprises on a fixe structure an assembly of two lower skirting half-pans or plates (103, 104) for a base of the reels and an upper skirting pan or plate (106) for the opposite base of the reels, both the assembly and pan or plate being movable near each other to clamp a reel (R), the two half-pans or plates having therebetween a sufficent gap or space for the passage of said one extensible stem.

18. A system as claimed in Claim 10, characterized in that said transfer apparatus (76) comprises at least one pliers member (114) formed of spreadable rods of suitable size for introduction between a rod of the dyeing basket and a reel thereon.

19. A system as claimed in Claim 18, characterized in that said transfer apparatus comprises a movable crosspiece (110) carrying two pliers members (114; 116) spaced apart and movable transversely of the crosspiece movement.

20. A system as claimed in Claim 10, characterized in that said transfer apparatus comprises a reel gripping member (300) including at least two jaws (312) movable between a closed oposition, at which they do not engage the inner wall of a reel corse, and an open position of engagement with said inner wall, each jaw having an attachment means and an operating means, and a gripping portion (318); and also a stop or abutment means (320) extended from said jaw, said gripping portion having an enlarged shape on each jaw to form a bul shape at closed jaws.

21. A system as claimed in Claim 20, characterized in that said stop means is a semicircular pan or plate (320) radially extended and arranged between the gripping portion (318) and the attachment means (314).

22. A system as claimed in Claim 10, characterized by said transfer apparatus comprises a gripping member (400) for reel spacing discs, said discs having a through hole, comprising jaws (412) movable between an open position for engaging the disc hole, and a closed position at which they do not engage said disc; on the jaws said member comprising a gripping portion (418), which in turn comprises an extended ridge forming a stop or retaining means (420), a circumferential groove (421) and a tooth (422) spaced apart from the ridge.

23. A system as claimed in Claim 6, characterized by comprising an apparatus (610) for applying and removing clamping devices (602) for reels on rods, said devices comprising a block (603) that can be slipped on the rod and being controlled by lever (604) between clamped and released condition, said apparatus comprising: gripping means (632, 633) to grip the clamping device; and lifting means for the device lever, comprising a cam (634) movable between a position for lowering of the lever by gravity, and a position at which it lifts the lever to a released condition of the device.

24. A system as claimed in Claim 23, wherein said gripping means comprise a pair of jaws (632, 633) movable between a position at which they do not engage the device, and a position at which they engage the device, the cam (634) being integral with one said jaw; said apparatus also comprises a support frame (626) for said gripping means and cam, said frame being vertically movable on a slide (616) and said slide being horizontally movable.

25. A system as claimed in Claim 10, wherein comprising a supply apparatus (510) for disc carrying rods (511), said rods having a foot (511') for engagement with said device, said apparatus comprising: a continuous conveyor means having engagement elements (518) for the rod feet, said engagement elements being longitudinally spaced apart on said means; and means for causing said conveyor means to be stepwise moved in forward direction.

26. A system as claimed in Claim 25, further comprising a pusher means (524) for the ejection of said rods from the engagement element.

27. A system as claimed in Claim 25, wherein each said engagement element comprises a sleeve dimensioned to receive the rod foot and a top U-shaped undercut or opening to receive the rod, said apparatus comprising guide rails fixed to the conveyer sides, said foot being of such an extension as to project beyond said engagement element and said continuous conveyor to slide on said rails.

28. A system as claimed in Claim 10, characterized by comprising a centering device (78, 78') for the dyeing basket rods (AR), on a fixed structure said device including jaws or arms (152, 154) rotating about vertical pins for arrangement about the rod.

29. A system as claimed in Claim 10, characterized by comprising a support platform for a dyeing basket, said platform being rotatin and linearly movable.

30. A system as claimed in Claim 10, characterized by further comprising a basket unloading unit (70') including a basket movable and rotating platform, a rod centering apparatus, a reel lifting apparatus to lift the reels on the rod, a reel transfer apparatus (76') of pliers type and a rotatin drawing positioning apparatus (72').

31. A system as claimed in Claim 30, characterized by said drawing-positioning apparatus comprises a rotating body and reel gripping members extensible from the body.

FIG.1

0113126

FIG.2

FIG.3

70'

76'

R

AR

R

DS

72'

AD

130    78'

0113126

3/23

FIG.4

FIG.5

16

34

35

36

18

32

B

37

38

39

FIG.6

FIG.7

FIG.8

## FIG.9

218  224  222  242  244  228' 240  236  248  250  R

80  212  220  246  230  232  234"  234'  234  A  F

## FIG.10

230

232

FIG.11

FIG.12

101

103

100

102

104

R

FIG.13

0113126

FIG.14

FIG.15

FIG.16

FIG.17

320a

320a

312

319

319

FIG.18

320a

312

420

412

**FIG.20**

**FIG.19**

400

415

414

415

416

412

420

418

422

421

DS

420'

FIG.21

FIG.22

211

627  632          635  633
23                        23
630

628  602    634  628  627  630

211

FIG.23

632  602  633

632'          633'

634

FIG.24

516

514
518

26

511

DS

26

FIG.26

520

522

518
514a

511

511'

514b

512

FIG.25

FIG.27

165

162

172

171

FIG.28

FIG.29

FIG.30

0113126

Application number

# EUROPEAN SEARCH REPORT

EP  83 11 3202

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | DE-A-2 300 838  (BECKER K.)<br><br>* The whole document * | 1,4,10 ,11,12 ,13,14 ,17,29 | B 65 H   67/06<br>D 06 B    5/16<br>B 65 G   47/14 |
| X | US-A-3 764 025  (HUSKY MANUFACTURING AND TOOL WORKS LTD)<br>* The whole document * | 1,2,3 | |
| A | | 6 | |
| A | US-A-3 361 246  (PHILLIPS PETROLEUM COMPANY)<br>* The whole document * | 1,6 | |
| A | US-A-2 813 617  (C.E. SCHEETZ) | | TECHNICAL FIELDS SEARCHED (Int. Cl. ³) |
| A,D | US-A-3 358 940  (W.L. BECKWITH) | | B 65 G<br>B 65 H<br>D 06 B |
| A,D | FR-A-2 228 018  (OFFICINE SAVIO) | | |

The present search report has been drawn up for all claims

| Place of search<br>THE HAGUE | Date of completion of the search<br>22-03-1984 | Examiner<br>DEPRUN M. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82